(19) Europäisches Patentamt

European Patent Office

Office européen des brevets

(11) **EP 2 591 319 B1**

(12) **EUROPEAN PATENT SPECIFICATION**

(45) Date of publication and mention
of the grant of the patent:
**24.11.2021 Bulletin 2021/47**

(21) Application number: **10747973.5**

(22) Date of filing: **09.07.2010**

(51) Int Cl.:
***G01F 1/84*** *(2006.01)*

(86) International application number:
**PCT/US2010/041472**

(87) International publication number:
**WO 2012/005734 (12.01.2012 Gazette 2012/02)**

(54) **A VIBRATING METER INCLUDING A DAMPED METER COMPONENT**

VIBROMETER MIT GEDÄMPFTER MESSKOMPONENTE

VIBROMÈTRE COMPRENANT UN COMPOSANT AMORTI

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**15.05.2013 Bulletin 2013/20**

(73) Proprietor: **Micro Motion, Inc.
Boulder, CO 80301 (US)**

(72) Inventors:
• **LANHAM, Gregory, Treat
Longmont, Colorado 80501 (US)**

• **WERBACH, Christopher, A.
Longmont, Colorado 80503 (US)**

(74) Representative: **Ellis, Christopher Paul et al
Ollila Law Limited
Unit 7 The Courtyard
Timothys Bridge Road
Stratford upon Avon CV37 9NP (GB)**

(56) References cited:
**WO-A1-02/052230          WO-A1-2009/078880
WO-A2-2006/056518      DE-A1- 3 923 409
DE-A1-102004 014 029   GB-A- 2 221 992
JP-A- H07 174 601**

**Description**

TECHNICAL FIELD

The present invention relates to, vibrating meters, and more particularly, to a vibrating meter component with a damping material applied to a surface of a meter component.

BACKGROUND OF THE INVENTION

Vibrating meters such as, for example, densitometers, volumetric flow meters, and Coriolis flow meters are used for measuring one or more characteristics of substances, such as, for example, density, mass flow rate, volume flow rate, totalized mass flow, temperature, and other information. Vibrating meters include one or more conduits, which may have a variety of shapes, such as, for example, straight, U-shaped, or irregular configurations.

The one or more conduits have a set of natural vibration modes, including, for example, simple bending, torsional, radial, and coupled modes. The one or more conduits are vibrated by at least one driver at a resonance frequency in one of these modes, hereinafter referred to as the drive mode, for purposes of determining a characteristic of the substance. One or more meter electronics transmit a sinusoidal driver signal to the at least one driver, which is typically a magnet/coil combination, with the magnet typically being affixed to the conduit and the coil being affixed to a mounting structure or to another conduit. The driver signal causes the driver to vibrate the one or more conduits at the drive frequency in the drive mode. For example, the driver signal may be a periodic electrical current transmitted to the coil.

One or more pick-offs detect the motion of the conduit(s) and generate a pick-off signal representative of the motion of the vibrating conduit(s). The pick-off is typically a magnet/coil combination, with the magnet typically being affixed to one conduit and the coil being affixed to a mounting structure or to another conduit. The pick-off signal is transmitted to the one or more electronics; and according to well-known principles, the pick-off signal may be used by the one or more electronics to determine a characteristic of the substance or adjust the driver signal, if necessary.

Typically, in addition to the conduits, vibrating meters are also provided with one or more meter components, such as a case, a base, flanges, etc. While essentially all of the additional meter components can create measurement problems due to various vibrational characteristics, the vibrational characteristics of the case are typically most prevalent and cause the most significant measurement problems. Therefore, although the case is the focus of the discussion that follows, similar vibrational problems and solutions are applicable to other meter components. The measurement problems caused by various meter components is due to the difficulty in differentiating vibrations associated with the conduits from vibrations associated with the meter component, such as the case. This is because, similar to the conduits, the case also has one or more natural modes of vibration, including for example, simple bending, torsional, radial, and lateral modes. The particular frequency that induces a mode of vibration generally depends on a number of factors such as the material used to form the case, the thickness of the case, temperature, pressure, etc. Vibrational forces generated by the driver or from other sources in the material processing system, such as pumps, may cause the case to vibrate in one of the natural modes. It is difficult to generate an accurate measurement of a characteristic of the substance in situations where the frequency used to drive the one or more conduits in the drive mode corresponds to a frequency that causes the case to vibrate in one of its natural modes of vibration. This is because the vibrational mode of the case can interfere with the vibration of the conduits leading to erroneous measurements.

There have been numerous prior art attempts to separate the frequencies that induce the case's vibrational mode from the conduits' vibrational mode. These frequencies may comprise the natural resonance frequencies of the various vibrational modes of the case and the fluid filled conduits. For example, the case can be made extremely stiff and/or massive in order to decrease the frequencies that induce the various vibrational modes away from the anticipated drive mode of the conduits. Both of these options have serious drawbacks. Increasing the mass and/or stiffness of the case results in complex and difficult manufacturing, this adds cost and makes mounting the vibrating meter difficult. One specific prior art approach to increasing the mass of the case has been to weld metal weights to an existing case. This approach docs not adequately dissipate vibrational energy in order to reduce the case's resonant frequencies. Further, this approach is often costly and produces an unsightly case.

Another prior art approach has been to modify the shape of the case. Such a prior art attempt is described in PCT Publication WO/2009/078880. The '880 publication discloses a generally U-shaped case that has an oval-shaped cross section. The oval-shaped cross section increases the frequency required to induce the modes of vibration above the drive mode frequency. Although the configuration shown in the '880 publication provides adequate results in limited situations, the process is expensive and time consuming. Further, the solution is not practical for existing vibrating meters. Rather, the '880 publication requires a completely new case and does not address problems associated with existing cases. Additionally, many meter cases require a specific shape and size as mandated by a customer or the existing tube configuration, for example. Another problem with the approach suggested in the '880 publication is that the frequency required to induce the modes of vibration of the case is higher than the anticipated drive frequency.

Therefore, the frequency range available for the drive mode is severely limited. WO2006/056518 also describes a known flow meter.

The present invention overcomes these and other problems and an advance in the art is achieved. The present invention provides a vibrating meter with damped meter components. The resonant frequencies of the damped meter components are reduced and separated away from the resonant frequencies of the conduits. Consequently, the drive mode of the vibrating meter does not induce a mode of vibration in the damped meter components.

SUMMARY OF THE INVENTION

The invention concerns a vibrating meter according to claim 1 and a method for forming such a meter according to claim 8. Preferred embodiments are according to the dependent claims.

BRIEF DESCRIPTION OF THE DRAWINGS

FIG. 1 shows a vibrating meter according to an embodiment of the invention.
FIG. 2 shows the vibrating meter including a case according to an embodiment of the invention.
FIG. 3 shows a cross-sectional view of the vibrating meter with a damping material applied to a surface of the case according to an embodiment of the invention.
FIG. 4 shows the vibrating meter according to another embodiment of the invention.
FIG. 5 shows a cross-sectional view of the vibrating meter according to another embodiment of the invention.

DETAILED DESCRIPTION OF THE INVENTION

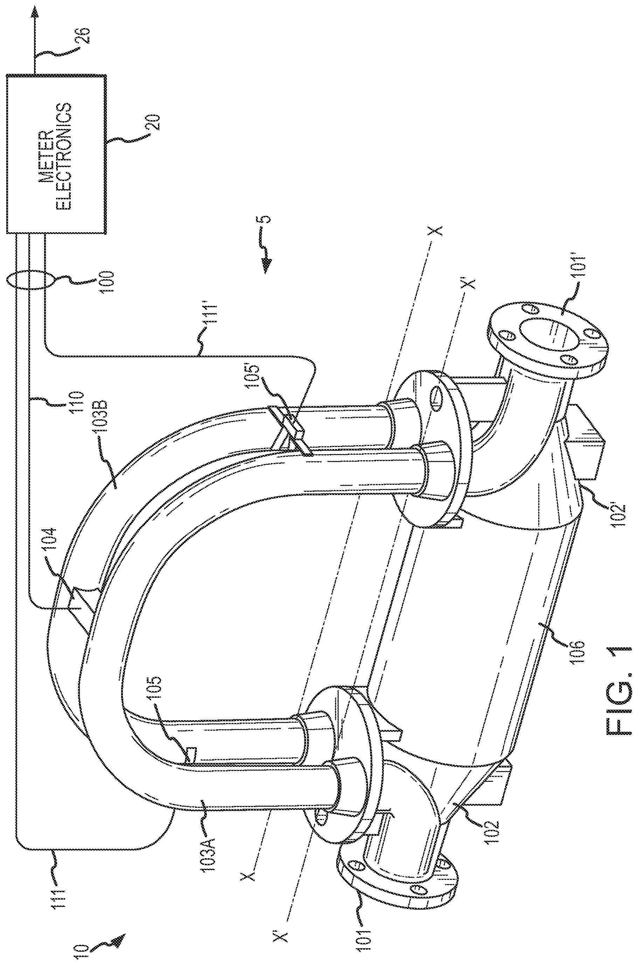

FIGS. 1 - 5 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the claims. Those skilled in the art will appreciate that the features described below can be combined in various ways to form multiple variations of the invention. As a result, the invention is not limited to the specific examples described below, but only by the claims.

FIG. 1 shows a vibrating meter 5 in the form of a meter comprising a sensor assembly 10 and one or more meter electronics 20. The vibrating meter 5 may comprise a Coriolis flow meter, a volumetric flow meter, a densitometer, etc. The meter electronics 20 is connected to the sensor assembly 10 via leads 100 to measure a characteristic of a substance, such as, for example, a fluid density, mass flow rate, volume flow rate, totalized mass flow, temperature, and other information over path 26.

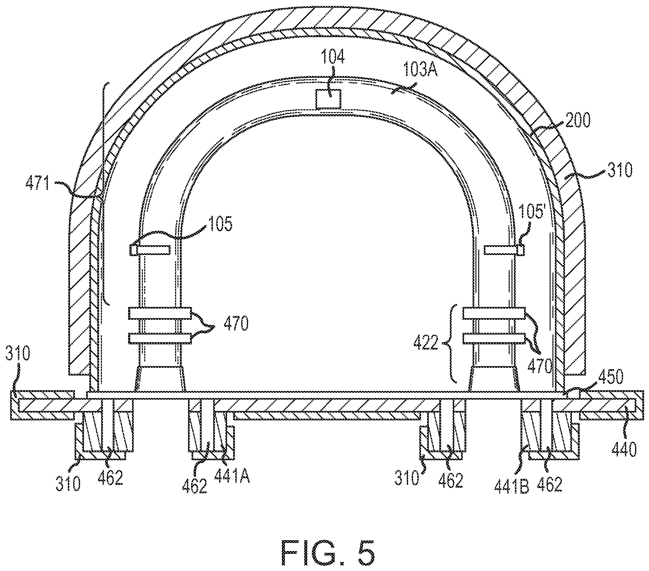

The sensor assembly 10 of the present example includes a pair of flanges 101, 101'; manifolds 102, 102'; a driver 104; pick-offs 105, 105'; and conduits 103A, 103B. The driver 104 and pick-offs 105, 105' are coupled to conduits 103A and 103B. The driver 104 is shown affixed to conduits 103A, 103B in a position where the driver 104 can vibrate a portion of the conduits 103A, 103B in a drive mode. It should be appreciated that there may be another portion of the conduits 103A, 103B that does not vibrate or vibrates undesirably (See FIG. 5). The pick-offs 105, 105' are affixed to conduits 103A, 103B in order to detect motion of the conduits 103A, 103B. Therefore, in vibrating meters, the vibration of the vibrating portion of the conduits 103A, 103B is of interest. For purposes of the description that follows, components of the vibrating meter 5 exclusive of the vibrating portion of the conduits 103A, 103B, driver 104, and pick-offs 105, 105' can be grouped as meter components that may also vibrate undesirably and interfere with the vibration of the conduits 103A, 103B.

It should be appreciated to those skilled in the art that it is within the scope of the present invention to use the principles discussed herein in conjunction with any type of vibrating meter, including vibrating meters that lack the measurement capabilities of a Coriolis flow meter. Examples of such device vibrating densitometers, volumetric flow meters, etc.

Flanges 101, 101' of the present example are coupled to manifolds 102, 102'. Manifolds 102, 102' of the present example are affixed to opposite ends of the spacer 106. The spacer 106 maintains the spacing between the manifolds 102, 102' to prevent undesired vibrations in conduits 103A, 103B. When the sensor assembly 10 is inserted into a pipeline system (not shown) which carries the substance, the substance enters sensor assembly 10 through the flange 101, passes through the inlet manifold 102 where the total amount of material is directed to enter the conduits 103A, 103B, flows through the conduits 103A, 103B, and back into outlet manifold 102' where it exits the sensor assembly 10 through the flange 101'.

According to an embodiment of the invention, the drive mode may be, for example, the first out of phase bending mode and the conduits 103A and 103B may be selected and appropriately mounted to the inlet manifold 102 and the outlet manifold 102' so as to have substantially the same mass distribution, moments of inertia, and elastic modules about the bending axes X and X', respectively. As shown, the conduits 103A, 103B extend outwardly from the manifolds 102, 102' in an essentially parallel fashion. Although the conduits 103A, 103B are shown provided with a generally U-shape, it is within the scope of the present invention to provide the conduits 103A, 103B with other shapes, such as, for example, straight or irregular shapes. Furthermore, it is within the scope of the present invention to utilize modes other than the first out of phase bending mode as the drive mode.

In the present example, where the drive mode comprises the first out of phase bending mode, the vibrating portion of the conduits 103A, 103B may be driven by the driver 104 at the resonance frequency of the first out of phase bending mode in opposite directions about their respective bending axes X and X'. The driver 104 may comprise one of many well-known arrangements, such as a magnet mounted to the conduit 103A and an opposing coil mounted to the conduit 103B. An alternating current can be passed through the opposing coil to cause both conduits 103A, 103B to oscillate. A suitable drive signal can be applied by one or more meter electronics 20, via lead 110 to the driver 104. It should be appreciated that while the discussion is directed towards two conduits 103A, 103B, in other embodiments, only a single conduit may be provided.

According to an embodiment of the invention, the one or more meter electronics 20 produces a drive signal and transmits it to the driver 104 via lead 110, which causes the driver 104 to oscillate the vibrating portion of the conduits 103A, 103B. It is within the scope of the present invention to produce multiple drive signals for multiple drivers. One or more meter electronics 20 can process the left and right velocity signals from the pick-offs 105, 105' to compute a characteristic of a substance, such as, for example, mass flow rate. The path 26 provides an input and an output means that allows the one or more meter electronics 20 to interface with an operator as is generally known in the art. An explanation of the circuitry of the one or more meter electronics 20 is not needed to understand the present invention and is omitted for brevity of this description. It should be appreciated that the description of FIG. 1 is provided merely as an example of the operation of one possible vibrating meter and is not intended to limit the teaching of the present invention.

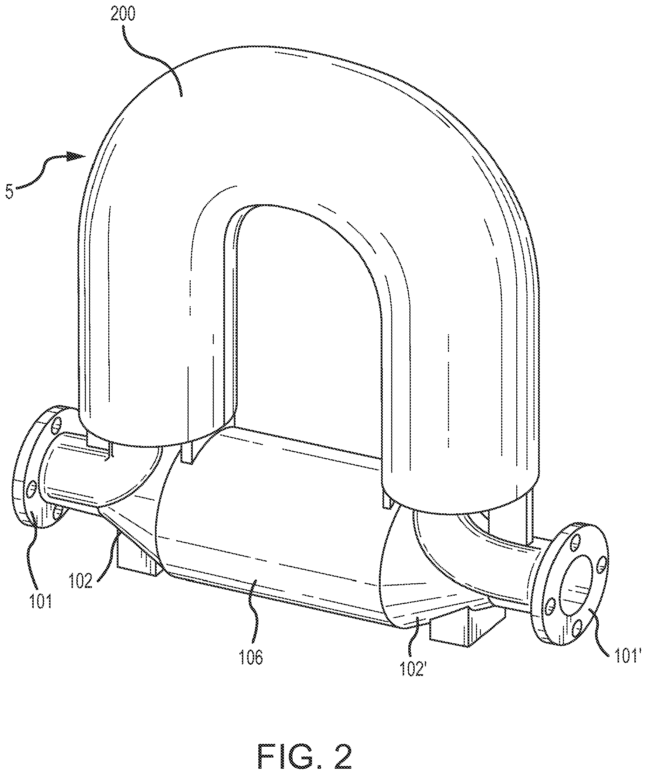

FIG. 2 shows the vibrating meter 5 according to another embodiment of the invention. According to the embodiment shown in FIG. 2, the vibrating meter 5 includes a case 200. The case 200 may be provided in two or more pieces and welded or otherwise coupled once in place. The case 200 can be provided to enclose the conduits 103A, 103B, the driver 104, and the pick-offs 105, 105'. As can be appreciated, the case 200 can protect the conduits 103A, 103B, the driver 104, and the pick-offs 105, 105' as is generally known in the art. The case 200 may provide an explosion-proof barrier. According to an embodiment of the invention, the case 200 may include an explosion rupture point, which is designed to fail at a predetermined pressure in order to safely exhaust the case in a specific direction.

While prior art cases are subject to vibrate in one or more vibrational modes due to an overlap between the drive mode and a resonant frequency of the case, the case 200 of the present invention is damped such that the frequencies required to induce the various modes of vibration of the case 200 are substantially reduced and separated away from the drive mode frequency.

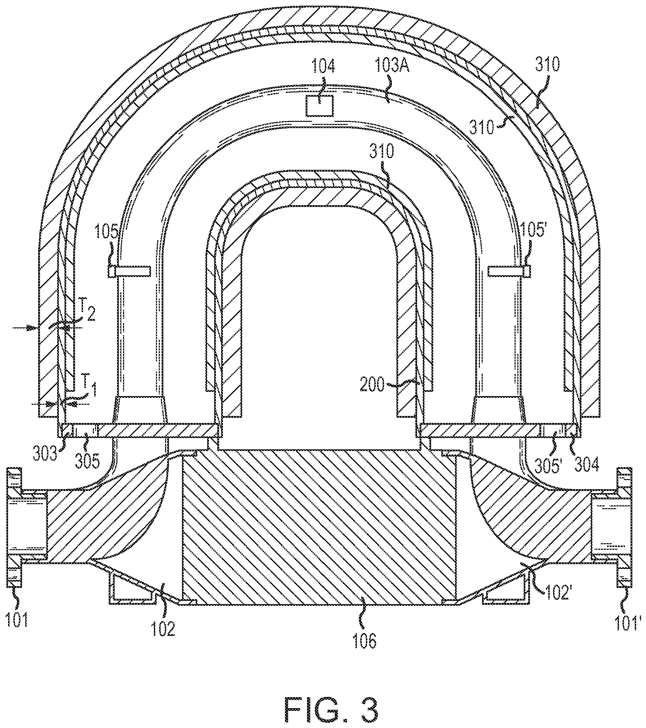

FIG. 3 shows a cross-sectional view of the vibrating meter 5 including the case 200 according to an embodiment of the invention. As shown in FIG. 3, the case 200 can be coupled to the manifolds 102, 102' via plates 303, 304, respectively. Because the manifolds 102, 102' are also coupled to the conduits 103A, 103B, vibrations of the case 200 can easily be experienced by the conduits 103A, 103B and interfere with the meter measurements. The case 200 can be coupled to the plates 303, 304 according to known methods including, for example, welding, brazing, bonding, adhesive, mechanical fasteners, etc. The particular method used to couple the case 200 to the plates 303, 304 is not important for purposes of the present invention. Also shown in FIG. 3 are openings 305, 305' adapted to receive leads 100 from the driver 104 and pick-offs 105, 105' that are connected to the meter electronics 20. Alternatively, openings for the leads 100 may be formed directly in the case 200. The leads 100 are omitted from FIG. 3 in order to simplify the drawing.

As discussed briefly above, one problem with vibrations in meter components, such as the case 200 is that the resonant frequency of the case 200 may be substantially close to the resonant frequency of the fluid filled conduits 103A, 103B. Consequently, the drive mode used to vibrate the vibrating portion of the conduits 103A, 103B may induce a mode of vibration in one or more of the meter components, which may interfere with the desired vibrations of the vibrating portion of the conduits 103A, 103B. The vibrational interference caused by the case 200 is typically greater than the interference caused by other meter components due to the relatively large surface area of the case 200. The potential overlap is generally due to the fact that the conduits 103A, 103B and the case 200 are typically manufactured from similar materials. For example, the conduits 103A, 103B are typically manufactured from a metallic material such as titanium or stainless steel and the case 200 is typically manufactured from a similar metallic material. Each vibrational mode of the case 200 is generated by a range of frequencies. Further, as known in the art, the drive mode frequency of the conduits 103A, 103B can vary over time due to changes in the fluid temperature or density, for example. Consequently, the drive mode may induce a mode of vibration in the case 200 at only certain fluid densities.

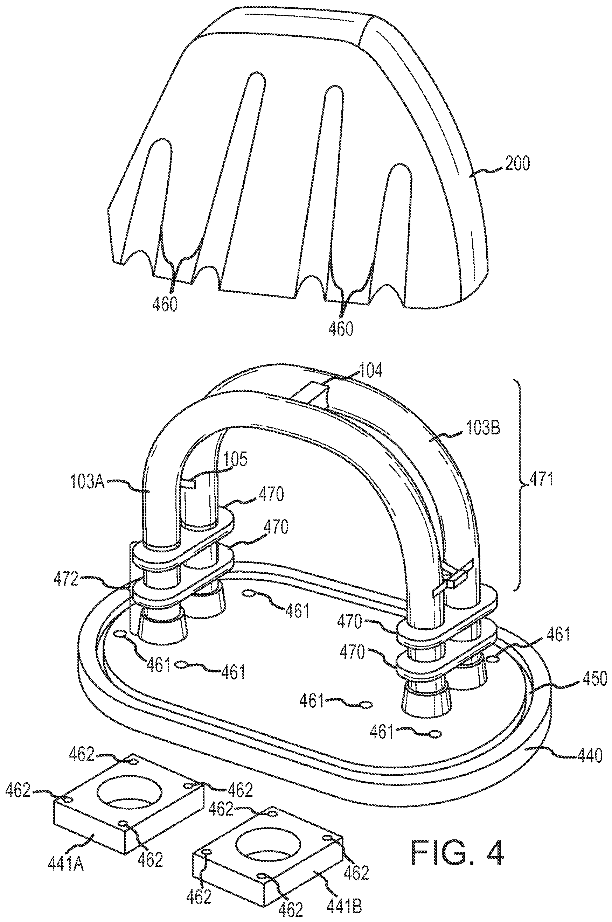

According to an embodiment of the invention, the potential overlap between the drive mode frequency and a frequency that may induce a mode of vibration in a meter component exclusive of the vibrating portion of the conduits 103A, 103B is substantially reduced. The present invention can include a damping material 310 applied to an entire surface of the meter case. In the example shown in FIG. 3, the damping material 310 is only applied to the case 200; however, it should be appreciated, that the damping material 310 may be applied to other meter components using similar techniques (See FIGS. 4 & 5 and accompanying discussion). While the damping material 310 is shown applied to both the outer and inner surfaces of the case 200, it should be appreciated that the damping material 310 may be applied to only one of the surfaces of the case 200. It should be appreciated that the thickness of the damping material 310 is greatly exaggerated in the figures for clarity and typically the damping material 310 will comprise a thin layer and may not be readily distinguishable from the meter component to which the damping material 310 is applied. For example, the case 200 has a thickness $T_1$ and the damping material 310 has a thickness $T_2$. Although not shown to scale in the figures, in many embodiments, the thickness $T_1$ will be greater than the thickness $T_2$. It should be appreciated however, that in other embodiments, the thickness $T_1$ of the case 200 may be less than the thickness $T_2$ of the damping material 310. According to an embodiment of the invention, the damping material 310 may be applied to the meter component such that the damping material 310 becomes an integral part of the meter component. The damping material 310 may be applied to the case 200 using a variety of techniques including, but not limited to spraying, brushing, adhesives, sintering, powder coating, vapor deposition, mechanical fasteners, or friction fit, such as an elastic skin. The elastic damping material skin may be pre-molded and applied by wrapping around the case 200. Preferably, regardless of the method used to apply the damping material 310, the damping material 310 substantially conforms to the shape and texture of the meter component.

In other embodiments, the damping material 310 may comprise a laminate or coating, which is applied to an outer surface of the case 200. The laminate damping material 310 may comprise one or more layers of a plastic material secured to the case 200 or to one another using an adhesive. One advantage of the present invention over prior art attempts is that the damping material 310 may be applied to an existing case 200 on a vibrating meter 5 that is already assembled. Alternatively, the damping material 310 may be applied to the case 200 prior to the case 200 being coupled to the plates 303, 304. This allows the damping material 310 to be applied to an interior surface of the case 200 as shown in FIG. 3. The damping material 310 can also be applied to a meter component as a thin layer that does not occupy a significant amount of space as in the prior art solutions of welding bulky weights to the case.

According to an embodiment of the invention, the damping material 310 comprises a material that is different from the material used to form the case 200. According to an embodiment of the invention, the damping material 310 comprises a material that is different from the material used to form the conduits 103A, 103B. Preferably, the damping material 310 comprises a material that exhibits greater vibrational damping characteristics than the case 200. For example, if the case 200 comprises a metal, the damping material 310 may comprise plastic, rubber, carbon fiber, fiberglass, graphite, glass, wood, etc. As is known in the art, vibrational damping is the conversion of mechanical energy (vibrations) into thermal energy. The heat generated due to damping is lost from the mechanical system into the surrounding environment. While damping can be characterized in a number of different ways, one specific vibrational damping characteristic is a so-called damping loss factor, $\eta$. A component's damping loss factor, $\eta$, can be expressed as follows:

$$\eta = \frac{D}{2\pi W} \tag{1}$$

Where:

   $\eta$ is the damping loss factor;
   D is the energy dissipated per unit volume per cycle; and
   W is the maximum strain energy stored during a cycle.

As can be appreciated, a higher damping loss factor is realized in materials having a greater dissipated energy per unit volume per cycle or a lower maximum strain energy stored during a cycle. Damping loss factors for a wide variety of materials are available in look-up tables, charts, graphs, etc. Alternatively, the damping loss factor for a specific material may be determined experimentally. Therefore, according to one embodiment of the invention, the damping material 310 may be chosen such that the damping material 310 has a lower damping loss factor than the material used to form the conduits 103A, 103B and/or the case 200, for example. As mentioned above, in many situations, the case 200 as well as the conduits 103A, 103B are formed from a metal. Therefore, one suitable material for the damping material 310 may comprise a plastic/polymer. In general, most metals have a damping loss factor in the range of approximately 0.001. In contrast, plastics/polymers have a damping loss factor in the range of 0.01 - 2.0. Therefore, by applying a damping material 310 to at least a portion of the case 200, the vibrational damping characteristic can be 10 and 2000 times higher than for the case 200 alone. Advantageously, with the damping material 310 applied to at least a portion of a surface of the case 200, the various frequencies required to induce a mode of vibration in the case 200 are substantially reduced while the drive mode frequency remains substantially unaffected. This results in frequency separation between the frequencies that induce a mode of vibration in the case 200 and the drive frequency that induces the drive mode of vibration in the conduits 103A, 103B.

According to an embodiment of the invention, the damping material 310 is applied to the case 200, such that a frequency separation between a frequency that induces a mode of vibration in the meter component and the drive mode frequency is greater than 1 Hertz. More preferably, the frequency separation is greater than 3-5 Hertz based on the anticipated fluid densities. The damping material 310 is applied to the case 200 in order to maintain sufficient frequency separation for a range of fluid densities. The damping material 310 is applied to a surface of the case 200 to lower the resonant frequencies of the case 200 to a level that remains below the drive mode frequency even during multi-phase flow. The degree of frequency separation can be adjusted based on the thickness and/or the specific material used for the damping material 310.

FIG. 4 shows a partially exploded view of the vibrating meter 5 according to another embodiment of the invention. In the embodiment shown in FIG. 4, the conduits 103A, 103B are coupled to a base 440. FIG. 5 shows a cross-sectional view of the vibrating meter 5 of FIG. 4 after being assembled.

According to an embodiment of the invention, the vibrating meter 5 may include one or more brace bars 470. The one or more brace bars 470 are provided to help aid in defining the bending axes, as described above. With the brace bars 470 in place, the conduits 103A, 103B are clearly separated into a vibration portion 471 and a non-vibrating portion 472. As explained above, the vibrating portion 471 of the conduits 103A, 103B comprises the portion of the conduits 103A, 103B that vibrates in a desirable manner due to the driver 104. In contrast, the non-vibrating portion 472 may vibrate due to the vibration of the vibrating portion 471 of the conduits 103A, 103B, but in an undesirable manner, *i.e.,* vibration of the non-vibrating portion 472 of the conduits 103A, 103B is unintentional. The base 440 may replace the spacer 106 provided in the previously described embodiments. According to an embodiment of the invention, the base 440 is further coupled to mounting blocks 441A, 441B. The mounting blocks 441A, 441B may provide a means for attaching the base 440 to the process line (not shown) or a manifold (not shown). According to an embodiment of the invention, the damping material 310 may be applied to the base 440, the mounting blocks 441A, 441B, the non-vibrating portion 472 of the conduits 103A, 103B, or all of the meter components, as shown in FIG. 5. The damping material 310 may therefore reduce the natural resonant frequencies of the base 440, the non-vibrating portion 472 of the conduits 103A, 103B, and/or the mounting blocks 441A, 441B so the drive mode does not induce a vibrational response in the base 440, the non-vibrating portion 472 of the conduits 103A, 103B, or the mounting blocks 441A, 441B.

According to an embodiment of the invention, the case 200 can be coupled to the base 440. According to the embodiment of FIGS. 4 & 5, the damping material 310 substantially completely covers the case 200. Consequently, the case 200 cannot be welded as is possible in the previous embodiments. Therefore, the case 200 in FIGS. 4 & 5 includes a plurality of detents 460. The detents 460 are provided in order to accommodate mechanical fasteners (not shown). The mechanical fasteners can fit within the detents 460 and engage the apertures 461 formed in the base 440 and the apertures 462 formed in the mounting blocks 441A, 441B. According to an embodiment of the invention, the mechanical fasteners may comprise U-bolts, for example that fit over the case 200.

According to an embodiment of the invention, the vibrating meter 5 can also include a sealing member 450 positioned between the base 440 and the case 200. The sealing member 450 can comprise a rubber O-ring, for example. According to an embodiment of the invention, the sealing member 450 can be provided to further isolate unwanted vibrations of the case 200 from the conduits 103A, 103B. Further, the sealing member 450 can provide a substantially fluid-tight seal between the case 200 and the base 440.

The present invention as described above provides a vibrating meter 5 and a method of manufacturing a vibrating meter 5 with one or more meter components that have a damping material 310 applied to their surface. Those skilled in the art will readily appreciate that various other meter components exclusive of the vibrating portion 471 of the conduits 103A, 103B, the driver 104, and the pick-offs 105, 105' can benefit from an applied damping material 310. As explained above, unlike bulky weights that are welded onto a case, the damping material 310 of the present invention can be applied as a thin layer, having a thickness less than the thickness of the meter component, as discussed above. Further, the damping material 310 is preferably chosen such that one or more resonance frequencies of the meter component are lowered upon applying the damping material 310. Advantageously, the damping material 310 can separate one or more frequencies that induce a mode of vibration in the meter component from the drive mode frequency of the vibrating portion of the conduits 103A, 103B. Therefore, measurement errors caused by an overlap in the frequencies can be substantially reduced or eliminated.

**EP 2 591 319 B1**

**Claims**

1. A vibrating meter (5), comprising:

   one or more conduits (103A, 103B) including a vibrating portion (471) and a non-vibrating portion (472);
   a driver (104) coupled to a conduit of the one or more conduits (103A, 103B) and configured to vibrate the vibrating portion (471) of the conduit at one or more drive frequencies;
   one or more pick-offs (105, 105') coupled to a conduit of the one or more conduits (103A, 103B) and configured to detect a motion of the vibrating portion (471) of the conduit;
   a case (200) that substantially surrounds the one or more conduits (103A, 103B), the driver (104), and the one or more pickoffs (105, 105'); and
   **characterized in that** the vibrating meter further comprises a damping material (310) applied to an entire surface of the case that reduces one or more vibrational resonant frequencies of the meter component below the one or more drive frequencies.

2. The vibrating meter (5) of claim 1, wherein the case has a first thickness, $T_1$ and the damping material (310) has a second thickness, $T_2$ less than the first thickness, $T_1$.

3. The vibrating meter (5) of claim 1, further comprising a base (440) coupled to the case (200) and a sealing member (450) providing a substantially fluid-tight seal between the case (200) and the base (440).

4. The vibrating meter (5) of claim 1, further comprising one or more detents (460) formed in the case (200) and adapted to receive mechanical fasteners.

5. The vibrating meter (5) of claim 1, further comprising a base (440) coupled to the one or more conduits (103A, 103B).

6. The vibrating meter (5) of claim 5, further comprising a mounting block (441A, 441B) coupled to the base (440).

7. The vibrating meter (5) of claim 1, wherein the damping material is further applied to a non-vibrating portion of a conduit of the one or more conduits (103A, 103B).

8. A method of forming a vibrating meter (5) as claimed in claim 1, comprising steps of:

   coupling the driver (104) to a conduit of the one or more conduits (103A, 103B), the driver (104) being configured to vibrate the vibrating portion (471) of the conduit at one or more drive frequencies;
   coupling the one or more pick-offs (105, 105') to a conduit of the one or more conduits (103A, 103B), the one or more pick-offs (105, 105') being configured to detect a motion of the vibrating portion (471) of the conduit; and
   **characterized in that** the method further comprises the step of applying the damping material (310) to the entire surface of the case.

9. The method of claim 8, wherein the case comprises a first thickness $T_1$ and wherein the step of applying the damping material (310) comprises applying the damping material (310) with a second thickness, $T_2$ less than the first thickness, $T_1$.

10. The method of claim 8, further comprising steps of coupling a base to the case (200) and positioning a substantially fluid-tight seal between the case (200) and the base.

11. The method of claim 8, further comprising a step of forming one or more detents in the case (200) that are adapted to receive mechanical fasteners.

12. The method of claim 8, wherein the vibrating meter further comprises a base and wherein the method further comprises a step of coupling the base to the one or more conduits (103A, 103B).

13. The method of claim 8, wherein the damping material is further applied to the non-vibrating portion (472) of a conduit of the one or more conduits (103A, 103B).

7

**Patentansprüche**

1. Vibrationsmesser (5), der Folgendes umfasst:

eine oder mehrere Leitungen (103A, 103B) mit einem vibrierenden Abschnitt (471) und einem nicht-vibrierenden Abschnitt (472);
einen Treiber (104), der mit einer Leitung der einen oder mehreren Leitungen (103A, 103B) gekoppelt und dafür konfiguriert ist, mindestens den vibrierenden Abschnitt (471) der Leitung mit einer oder mehreren Ansteuerfrequenzen zu vibrieren;
einen oder mehrere Abgriffe (105, 105'), die mit einer Leitung der einen oder mehreren Leitungen (103A, 103B) verbunden und dafür konfiguriert sind, eine Bewegung des vibrierenden Abschnitts (471) der Leitung zu erfassen;
ein Gehäuse (200), das die eine oder mehreren Leitungen (103A, 103B), den Treiber (104) und den einen oder die mehreren Abgriffe (105, 105') im Wesentlichen umgibt; und
**dadurch gekennzeichnet, dass** der Vibrationsmesser ferner ein Dämpfungsmaterial (310) umfasst, das auf eine gesamte Oberfläche des Gehäuses aufgebracht ist, das eine oder mehre Vibrationsresonanzfrequenzen der Messerkomponente unter die eine oder mehreren Antriebsfrequenzen reduziert.

2. Vibrationsmesser (5) nach Anspruch 1, wobei das Gehäuse eine erste Dicke $T_1$ und das Dämpfungsmaterial (310) eine zweite Dicke $T_2$ kleiner als die erste Dicke $T_1$ aufweist.

3. Vibrationsmesser (5) nach Anspruch 1, der ferner eine Basis (440) umfasst, die an das Gehäuse (200) gekoppelt ist, und ein Dichtungselement (450), das eine im Wesentlichen fluiddichte Abdichtung zwischen dem Gehäuse (200) und der Basis (440) bereitstellt.

4. Vibrationsmesser (5) nach Anspruch 1, der ferner eine oder mehrere Rasten (460) umfasst, die in dem Gehäuse (200) gebildet und dafür ausgelegt sind, mechanische Befestigungselemente zu empfangen.

5. Vibrationsmesser (5) nach Anspruch 1, der ferner eine Basis (440) umfasst, die mit der einen oder den mehreren Leitungen (103A, 103B) gekoppelt ist.

6. Vibrationsmesser (5) nach Anspruch 5, der ferner einen Befestigungsblock (441A, 441B) umfasst, der an die Basis (440) gekoppelt ist.

7. Vibrationsmesser (5) nach Anspruch 1, wobei das Dämpfungsmaterial ferner an einen nicht-vibrierenden Abschnitt einer Leitung der einen oder mehreren Leitungen (103A, 103B) aufgebracht wird.

8. Verfahren zum Bilden eines Vibrationsmessers (5) nach Anspruch 1, das folgende Schritte umfasst:

Koppeln des Treibers (104) mit einer Leitung der einen oder mehreren Leitungen (103A, 103B), wobei der Treiber (104) dafür konfiguriert ist, den vibrierenden Abschnitt (471) der Leitung mit einer oder mehreren Antriebsfrequenzen zu vibrieren;
Koppeln des einen oder der mehreren Abgriffe (105, 105') mit einer Leitung der einen oder mehreren Leitungen (103A, 103B), wobei der eine oder die mehreren Abgriffe (105, 105) dafür konfiguriert sind, eine Bewegung des vibrierenden Abschnitts (471) der Leitung zu erfassen; und
**dadurch gekennzeichnet, dass** das Verfahren ferner den Schritt des Auftragens des Dämpfungsmaterials (310) auf die gesamte Oberfläche des Gehäuses umfasst.

9. Verfahren nach Anspruch 8, wobei das Gehäuse eine erste Dicke $T_1$ umfasst und wobei der Schritt des Auftragens des Dämpfungsmaterials (310) das Auftragen des Dämpfungsmaterials (310) mit einer zweiten Dicke, $T_2$, die kleiner als die erste Dicke $T_1$ ist, umfasst.

10. Verfahren nach Anspruch 8, das ferner die Schritte des Koppelns einer Basis mit dem Gehäuse (200) und des Positionierens einer im Wesentlichen fluiddichten Abdichtung zwischen dem Gehäuse (200) und der Basis umfasst.

11. Verfahren nach Anspruch 8, das ferner einen Schritt des Bildens einer oder mehrerer Arretierungen in dem Gehäuse (200) umfasst, die dafür ausgelegt sind, mechanische Befestigungselemente zu empfangen.

12. Verfahren nach Anspruch 8, wobei der Vibrationsmesser ferner eine Basis umfasst und wobei das Verfahren ferner einen Schritt des Verbindens der Basis mit der einen oder den mehreren Leitungen (103A, 103B) umfasst.

**13.** Verfahren nach Anspruch 8, wobei das Dämpfungsmaterial ferner an den nicht-vibrierenden Abschnitt (472) einer Leitung der einen oder mehreren Leitungen (103A, 103B) aufgebracht wird.

**Revendications**

**1.** Vibromètre (5), comprenant :

un ou plusieurs conduits (103A, 103B) incluant une partie vibrante (471) et une partie non vibrante (472) ;
un excitateur (104) accouplé à un conduit du ou des conduits (103A, 103B) et configuré pour faire vibrer la partie vibrante (471) du conduit à une ou plusieurs fréquences d'excitation ;
un ou plusieurs capteurs de mesure (105, 105') accouplés à un conduit du ou des conduits (103A, 103B) et configurés pour détecter un mouvement de la partie vibrante (471) du conduit ;
un boîtier (200) qui enferme sensiblement le ou les conduits (103A, 103B), l'excitateur (104) et un ou plusieurs capteurs de mesure (105, 105') ; et
le vibromètre étant **caractérisé en ce qu'**il comprend en outre un matériau d'amortissement (310), appliqué sur une surface entière du boîtier, qui réduit une ou plusieurs fréquences de résonance vibratoires du composant de mesure en deçà de la ou des fréquences d'excitation.

**2.** Vibromètre (5) selon la revendication 1, dans lequel le boîtier présente une première épaisseur ($T_1$) et le matériau d'amortissement (310) présente une seconde épaisseur ($T_2$) inférieure à la première épaisseur ($T_1$),

**3.** Vibromètre (5) selon la revendication 1, comprenant en outre une base (440) accouplée au boîtier (200) et un élément d'étanchéité (450) produisant un joint sensiblement étanche aux fluides entre le boîtier (200) et la base (440).

**4.** Vibromètre (5) selon la revendication 1, comprenant en outre un ou plusieurs crans (460) formés dans le boîtier (200) et conçus pour recevoir des éléments de fixation mécaniques.

**5.** Vibromètre (5) selon la revendication 1, comprenant en outre une base (440) accouplée au ou aux conduits (103A, 103B).

**6.** Vibromètre (5) selon la revendication 5, comprenant en outre un bloc de montage (441A, 441B) accouplé à la base (440).

**7.** Vibromètre (5) selon la revendication 1, dans lequel le matériau d'amortissement est en outre appliqué sur une partie non vibrante d'un conduit du ou des conduits (103A, 103B).

**8.** Procédé de formation d'un vibromètre (5) selon la revendication 1, comprenant les étapes consistant à :

accoupler l'excitateur (104) à un conduit du ou des conduits (103A, 103B), l'excitateur (104) étant configuré pour faire vibrer la partie vibrante (471) du conduit à une ou plusieurs fréquences d'excitation ;
accoupler le ou les capteurs de mesure (105, 105') à un conduit du ou des conduits (103A, 103B), le ou les capteurs de mesure (105, 105') étant configurés pour détecter un mouvement de la partie vibrante (471) du conduit ; et
le procédé étant **caractérisé en ce qu'**il comprend en outre l'étape consistant à appliquer le matériau d'amortissement (310) sur la surface entière du boîtier.

**9.** Procédé selon la revendication 8, dans lequel le boîtier présente une première épaisseur ($T_1$) et dans lequel l'étape d'application du matériau d'amortissement (310) consiste à appliquer le matériau d'amortissement (310) avec une seconde épaisseur ($T_2$) inférieure à la première épaisseur ($T_1$) .

**10.** Procédé selon la revendication 8, comprenant en outre les étapes consistant à accoupler une base au boîtier (200) et à positionner un joint sensiblement étanche aux fluides entre le boîtier (200) et la base.

**11.** Procédé selon la revendication 8, comprenant en outre une étape consistant à former un ou plusieurs crans (200) qui sont conçus pour recevoir des éléments de fixation mécaniques.

12. Procédé selon la revendication 8, dans lequel le vibromètre comprend en outre une base et le procédé comprenant en outre une étape consistant à accoupler la base au ou aux conduits (103A, 103B).

13. Procédé selon la revendication 8, dans lequel le matériau d'amortissement est en outre appliqué sur une partie non vibrante (472) d'un conduit du ou des conduits (103A, 103B).

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009078880 A

- WO 2006056518 A